# EUROPÄISCHE PATENTSCHRIFT

(11) **EP 2 357 048 B1**
(45) Veröffentlichungstag und Bekanntmachung des Hinweises auf die Patenterteilung: **05.06.2013**
(21) Anmeldenummer: 10001351.5
(22) Anmeldetag: 10.02.2010
(51) Int. Cl.: B21D 28/06, B21D 28/08, B21D 53/28, B21D 28/16

(54) **Verfahren und Vorrichtung zum Beeinflussen der Schnitt- und Funktionsfläche an feingeschnittenen Fertigteilen**
Method and device for influencing the cutting and functional areas on fine-cut finished parts
Procédé et dispositif destinés à influencer la surface de coupe et de fonction sur des pièces finies coupées en fines tranches

(43) Veröffentlichungstag der Anmeldung: 17.08.2011
(73) Patentinhaber: Feintool Intellectual Property AG, 3250 Lyss (CH)
(72) Erfinder: Schlatter, Ukrich, Dipl.-Ing., 3250 Lyss (CH); Delis, Andreas, Dipl.-Ing., 3250 Lyss (CH)
(74) Vertreter: Hannig, Wolf-Dieter

(56) Entgegenhaltungen:
- CH-A5- 665 367
- DE-A1- 19 707 753
- DE-A1- 19 738 635
- DE-A1-102007 005 847
- US-A- 3 724 305
- US-A- 4 876 876

## Beschreibung

Die Erfindung betrifft ein Verfahren zum Beeinflussen der Schnitt- und Funktionsfläche, insbesondere des Einzugs, an feingeschnittenen Fertigteilen, beispielsweise eines Zahnrades o. dgl., aus einem Bandstreifen, bei dem der Bandstreifen zwischen einem zumindest aus Schneidstempel, Führungsplatte für den Schneidstempel umfassenden Oberteil und einem zumindest Schneidplatte und Auswerfer 0enthaltenden Unterteil beim Schließen geklemmt und in einer ersten Arbeitsstufe ein Rohteil aus dem Bandstreifen mit Einzug ausgeschnitten wird.

Die Erfindung betrifft ferner eine Vorrichtung geeignet zum Beeinflussen der Schnitt- und Funktionsfläche, insbesondere des Einzugs an feingeschnittenen Fertigteilen, beispielsweise eines Zahnrades o. dgl., aus einem Bandstreifen, mit einem zweiteiligen Werkzeug, das in der ersten Arbeitsstufe mindestens einen Schneidstempel, eine Führungsplatte für den Schneidstempel, einen Auswerfer und eine Schneidplatte, wobei der Bandstreifen zwischen Führungsplatte und Schneidplatte beim Feinschneiden eines Rohteiles eingeklemmt ist, und in der zweiten Arbeitsstufe einen Stempel und eine die Endkontur aufweisende Matrize umfasst.

### Stand der Technik

In der Feinschneid- und Umformtechnik werden vorwiegend Stähle verarbeitet. Dabei erstreckt sich die Vielfalt verwendeter Werkstoffe von einfachen Baustählen bis hin zu hochfesten Feinkornstählen. Die Ressource "Werkstoff" hat in den letzten Jahren stark an Bedeutung gewonnen. Mit einer optimalen Werkstoffausnutzung lassen sich die Herstellkosten eines Bauteiles wesentlich beeinflussen. Die hochfesten Stähle ermöglichen dünnwandigere Bauteile bei gleichem Festigkeitsverhalten.

Typisches Merkmal von Feinschneidteilen ist der Kanteneinzug. Insbesondere in Eckenpartien stellt sich der Einzug ein, der mit kleiner werdendem Eckenradius und steigender Blechdicke zunimmt. Die Einzugstiefe kann rd. 20% und die Einzugsbreite etwa 30% der Blechdicke oder mehr betragen (siehe DIN 3345, Feinschneiden, Aug. 1980). Der Einzug ist damit abhängig von Materialdicke und -qualität, so dass seine Steuerung nur begrenzt möglich ist und oft eine Einschränkung der Teilefunktion, beispielsweise durch eine fehlende Scharfkantigkeit der Ecken bei Verzahnungsteilen oder durch die hervorgerufene Änderung der Funktionslänge der Teile, mit sich bringt.
Der Stanzeinzug reduziert deshalb die Teilefunktion, und zwingt den Hersteller zur Verwendung eines dickeren Ausgangsmaterials.

Es sind eine ganze Reihe von Lösungen bekannt, die versuchen, den Kanteneinzug entweder durch Nachschneiden (CH 665 367 A5), Nachschaben (DE 197 38 636 A1) oder Verschieben von Material während des Schneidens (EP 1 815 922 A1) zu beseitigen.
Die bekannten Lösungen nach CH 665 367 A5 und DE 197 38 636 A1 reduzieren nicht den Kanteneinzug, sondern bearbeiten die Teile aufwändig nach, so dass einerseits erhebliche Kosten für zusätzliche Bearbeitungsvorgänge und Werkzeuge erforderlich sind, und andererseits entsprechender Materialverlust durch die Notwendigkeit des dickeren Materialeinsatzes eintritt.
Bei der bekannten Lösung gemäß EP 1 815 922 A1 wird das Werkstück in einer einstufigen Anordnung in mindestens zwei zeitlich aufeinander ablaufenden Schrittfolgen in unterschiedlichen Schnittrichtungen bearbeitet, wobei in einem ersten Schneidvorgang in vertikaler Arbeitsrichtung ein auf die Werkstückgeometrie abgestimmtes Halbfertigfabrikat mit einem geringen Einzug ausgeschnitten und in mindestens einem weiteren Schneidvorgang in entgegengesetzter Arbeitsrichtung das Teil fertiggeschnitten wird. Der Einzug des ersten Teilschritts soll dabei zumindest im Eckbereich wieder aufgefüllt werden.
Des Weiteren ist aus der EP 2 036 631 A1 ein Verfahren zum gezielten Reduzieren des Kanteneinzugs beim Feinschneiden eines Werkstücks aus einem Bandstreifen bekannt, bei dem vor Beginn des Schnitts am eingespannten unbehandelten Bandstreifen entgegen der Schneidrichtung mit einem Vorformelement ein negatives Vorformen durchgeführt wird, das dem erwarteten Kanteneinzug beim Schneiden in die Schneidplatte in Größe und Geometrie zuzüglich einer Zugabe entspricht und ein Materialvolumen in gespiegelter Form an der Einzugsseite erzeugt. Der vorgeformte Bereich des eingespannten Bandstreifens wird dabei durch das Vorformelement abgestützt.
Der Nachteil all dieser bekannten technischen Lösungen besteht, darin, dass der beim Feinschneiden entstehende Einzug lediglich vermindert, aber letztendlich nicht beseitigt und nicht gezielt beeinflusst werden kann.

Des Weiteren sind aus der DE 197 07 753 A1 und US 4 876 876 A Bearbeitungsverfahren zum Herstellen von Zahnrädern bekannt, bei denen die Zähnen durch ein grat- und einzugsloses Umformen erzeugt werden.

### Aufgabenstellung

Bei diesem Stand der Technik liegt der Erfindung die Aufgabe zugrunde, ein Verfahren und eine Vorrichtung zum gezielten Beeinflussen der Schnitt- und Funktionsfläche, insbesondere des Einzugs beim Herstellen von Fertigteilen wie beispielsweise Zahnräder bereitzustellen, in dem der Kanteneinzug bei gleichzeitiger Beibehaltung der Funktionsflächen unter Einsparung von Material gezielt beeinflusst oder gänzlich beseitigbar ist.

Diese Aufgabe wird durch ein Verfahren der eingangs genannten Gattung mit den Merkmalen des Anspruchs 1 und durch eine Vorrichtung mit den Merkmalen des Anspruchs 5 gelöst.

Vorteilhafte Ausgestaltungen des Verfahrens und der Vorrichtung sind den Unteransprüchen entnehmbar.

Die erfindungsgemäße Lösung geht von der Erkenntnis aus, den Einzug durch eine Materialzugabe an der Kontur eines Rohteils bereits vor der Feinschneidoperation gezielt zu beeinflussen und dessen Größe auf ein gewünschtes Maß einzustellen

Dies wird dadurch erreicht, dass das Rohteil zumindest im Bereich des Einzugs in einer gegenüber dem Fertigteil definiert gewählten Materialzugabe zur Kontur ausgeschnitten wird, deren Größe innerhalb der ersten Arbeitsstufe auf ein Materialvolumen eingestellt wird, das den durch den erwarteten Einzug hervorgerufenen Volumendefekt in einen vorgegebenen Maß ergänzt, ausgleicht oder übertrifft, und dass anschließend in einer zweiten Arbeitsstufe dieses Materialvolumen durch einen Umformvorgang entgegen der Schneidrichtung der ersten Arbeitsstufe an der Schnittlinie des Rohteils zum Auffüllen des gewünschten Einzugs verschoben wird.

Von besonderem Vorteil ist, dass die Größe der Materialzugabe zur Kontur in Abhängigkeit der Geometrie des Fertigteiles, der Festigkeit und Art des Materials, der Dicke des Fertigteils durch eine virtuelle Feinschneidsimulation und die Größe des zu verschiebenden Materialvolumens durch eine virtuelle Umformsimulation vor dem Feinschneiden bestimmt wird.

In einer bevorzugten Ausführungsvariante läuft das erfindungsgemäße Verfahren in folgenden Schritten ab:
a) Durchführen einer Feinschneidsimulation in demjenigen Bereich am Fertigteil, welcher beeinflusst werden soll, und Ermitteln eines virtuellen Einzugs,
b) Bestimmen der Topografie des zu erwartenden Einzugs aus Schritt a) und der Topografie eines gewünschten Einzugs am Fertigteil,
c) Bestimmen des fehlenden Volumens aus Schritt b), um die gewünschte Endkontur beim Einzug am Fertigteil zu erreichen,
d) Bestimmen einer korrigierten Kontur für den entsprechenden Bereich (Sollkontur) aus den Schritten a) bis c) durch Materialzugabe, um das fehlende b) Volumen im Bereich des Einzugs zu ergänzen,
e) Durchführen eines erneuten virtuellen Feinschneidens der korrigierten Kontur (Sollkontur) und Bestimmen der Topografie des sich einstellenden Einzugs,
f) Durchführen eines virtuellen Umformens der feingeschnittenen, korrigierten Kontur mit einer Umformmatrize, welche nach der Endkontur des Fertigteils ausgelegt ist und Bestimmen des sich einstellenden korrigierten Einzuges,
g) Wiederholen der Schritte d) bis f) bis der gewünschte Einzug erreicht wird,
h) Auslegen von Schneidplatte und Schneidstempel der ersten Arbeitsstufe auf die mit den Schritten a) bis g) gefundene korrigierte Kontur (Sollkontor) des Rohteils.

Das erfindungsgemäße Verfahren ist variabel einsetzbar. So kann es überall dort zum Einsatz gebracht werden, wo der Einzug kompensiert werden soll, beispielsweise zum Herstellen von Kettenrädern, Zahnrädern, Zahnpumpenräder, Zahnsegmente oder Teilen mit funktionalen Ecken.

Die Aufgabe wird weiterhin durch eine Vorrichtung dadurch gelöst, dass die Matrize eine dem Stempel zugewandte Anwinklung aufweist und die zweite Arbeitsstufe einen Auswerfer enthält, wobei das zwischen Stempel und Auswerfer geklemmte, mit einer Materialzugabe ausgeschnittene Rohteil in die Matrize zurückgedrückt wird, so dass die Materialzugabe entlang der Schnittfläche des feingeschnittenen Rohteils zum gezielten Auffüllen des Einzugs verschoben wird.

In weiterer Ausgestaltung der erfindungsgemäßen Vorrichtung hat die Matrize eine Anwinklung von etwa 8 bis 15°, vorzugsweise 10°, die mit einem scharfen Übergang zur senkrechten Endkontur versehen ist.

Die erfindungsgemäße Vorrichtung ist einfach und robust im Aufbau und hat den großen Vorteil, dass die erste Arbeitsstufe (Feinschneiden) und die zweite Arbeitsstufe (Umformen) innerhalb eines Werkzeuges durchgeführt werden können.

Weitere Vorteile und Einzelheiten ergeben sich aus der nachfolgenden Beschreibung unter Bezugnahme auf die beigefügten Zeichnungen.

### Ausführungsbeispiel

Die Erfindung soll nachstehend an einem Ausführungsbeispiel näher erläutert werden.

Es zeigen

Fig. 1 ein herkömmlich feingeschnittenes Kettenrad an der Einzugsseite,

Fig. 2 eine Darstellung der geometrischen Verhältnisse an einem Zahn eines Kettenrades mit einem gewünschten Stanzeinzug,

Fig. 3 eine schematische Darstellung der End- und Sollkontur an einem Zahn des Kettenrades,

Fig. 4 eine schematische Darstellung eines virtuell feingeschnittenen Kettenrads mit dem erwarteten Einzug,

Fig. 5 eine schematische Darstellung der Topographie des ermittelten Einzuges,

Fig. 6 ein nach dem erfindungsgemäßen Verfahren feingeschnittenes Kettenrad mit scharfkantigen Zähnen,

Fig. 7 eine Schnittdarstellung der ersten Arbeitsstufe,

Fig. 8 eine Schnittdarstellung der der zweiten Arbeitsstufe und

Fig. 9 eine Einzelheit X aus der Fig. 7 mit vergrößerter Darstellung der Matrize in der zweiten Arbeitsstufe.

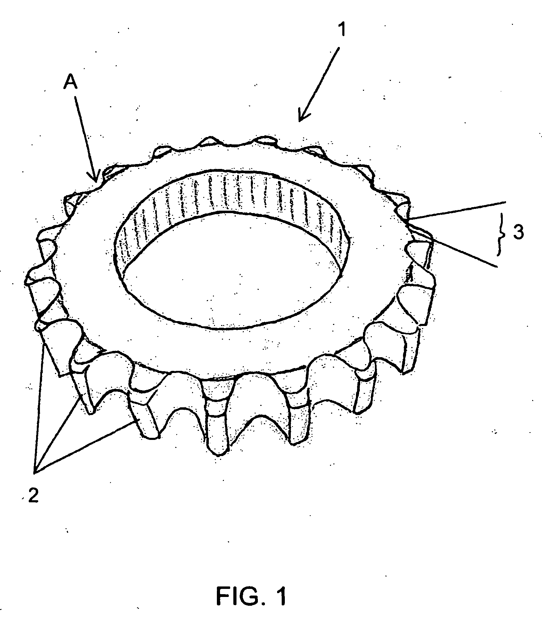

Die Fig. 1 zeigt ein Kettenrad 1 von der Einzugsseite A, das durch herkömmliches Feinschneiden hergestellt wurde.

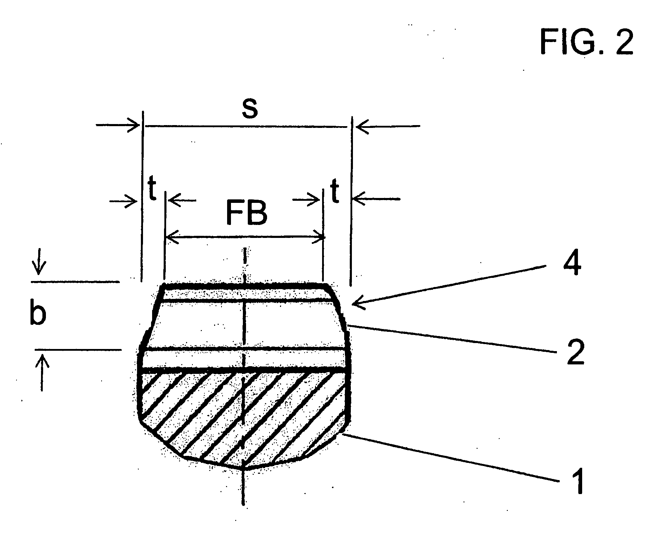

An den einzelnen Zähnen 2 des Kettenrades 1 ist der Einzug 3 zu erkennen, der mit kleiner werdenden Eckenradius und steigender Blechdicke zunimmt. Die Einzugstiefe t kann etwa 20% und die Einzugsbreite b ca. 30% der Blechdicke ausmachen (siehe Fig. 2), so dass die Funktionsfläche an den Zähnen des Kettenrades erheblich reduziert werden und ein dickeres Ausgangsmaterial zum Einsatz kommen muss, um die Teilefunktion, beispielsweise die Momentübertragung zu gewährleisten.

Mit dem erfindungsgemäßen Verfahren soll dieser Einzug 3 in einem großen Bereich variabel gesteuert, d.h. ein für ein Fertigteil funktional vorgegebener Einzug erreicht werden. Mit anderen Worten soll der Einzug an Fertigteilen im Bereich zwischen normalen Werten und Null (ohne Einzug) einstellbar sein.
Der Ablauf des erfindungsgemäßen Verfahrens wird nachfolgend am Beispiel des Kettenrades 1 aus einem Kaltfließpressstahl der Stahlqualität 16MnCr5/1.7131 mit einer Materialdicke s vom 7 mm näher erläutert.

Die Fig. 2 zeigt an einem Zahn 2 des Kettenrades 1 die geometrischen Verhältnisse für einen gewünschten Einzug 4. Die Einzugstiefe t soll 0,8 mm und die Einzugsbreite b soll 2,3 mm an beiden Zahnflanken betragen. Die Funktionsbreite FB am Zahn soll 5,4 mm erreichen.

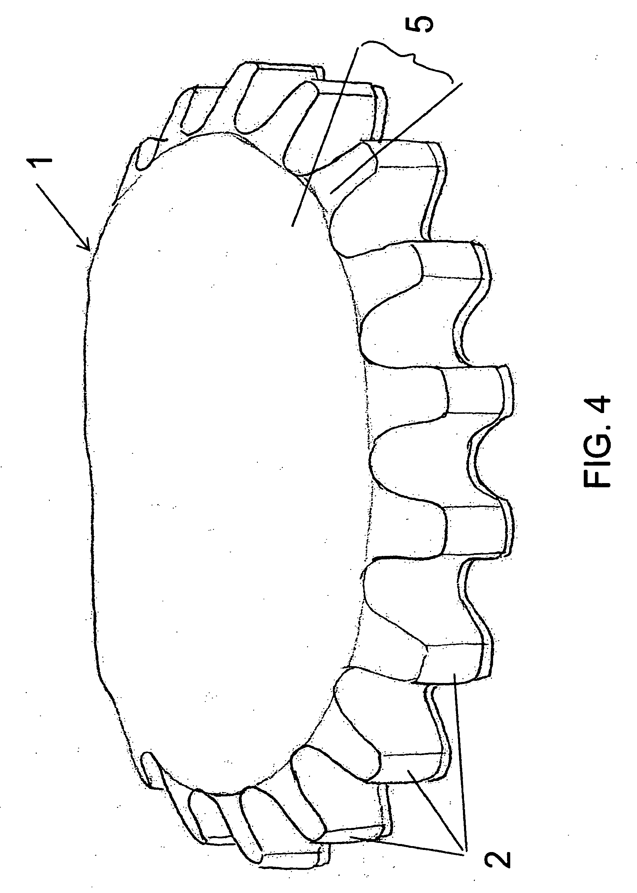

Das erfindungsgemäße Verfahren läuft zunächst in mehreren Arbeitsschritten ab, die dem eigentlichen zweistufigen Herstellungsvorgang des Kettenrades vorgeordnet sind. In einem ersten Arbeitsschritt wird der zu erwartende Einzug 5 durch ein normales Feinschneiden an denjenigen Bereichen des Kettenrades 1 virtuell ermittelt, die beeinflusst werden sollen. Das Ergebnis dieser Simulation zeigt Fig. 4.

Der Einzug lässt sich als ein Volumendefekt am Fertigteil, d.h. am Kettenrad 1, definieren. Somit kann aus dem gewünschten Einzug 4 und dem erwarteten Einzug 5 im zweiten Arbeitsschritt das fehlende Volumen bestimmt werden, das nötig ist, um eine gewünschte Endkontur am Kettenrad zu erreichen.

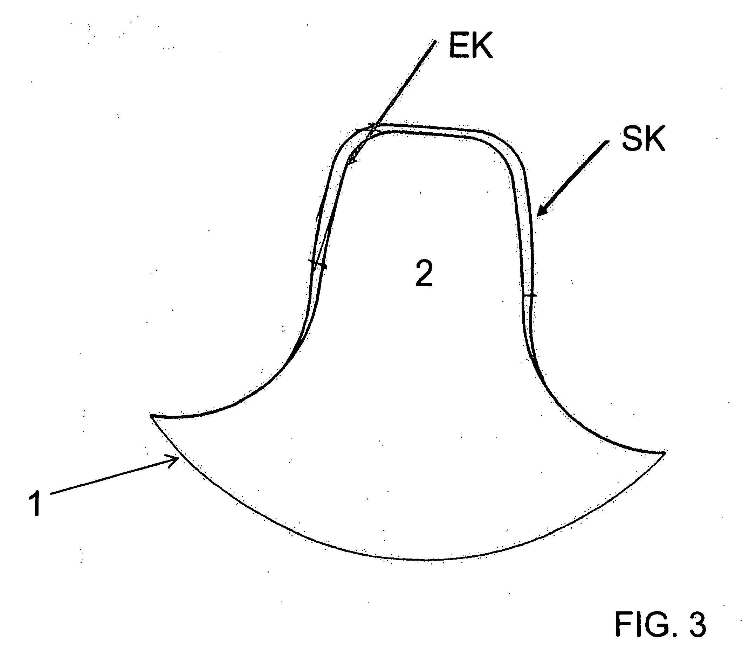

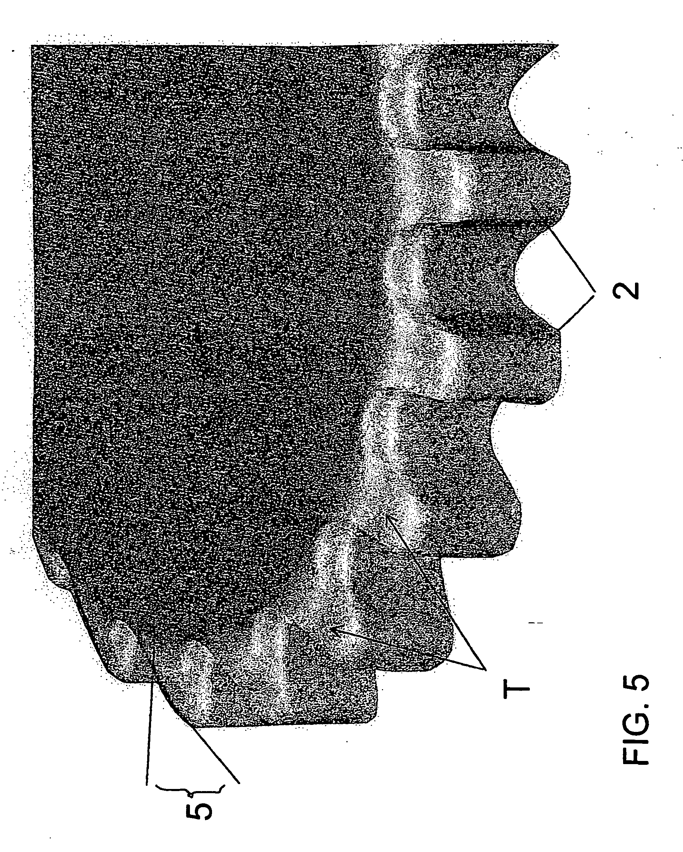

Im den sich anschließenden dritten Arbeitsschritt wird die Topographie T am zu erwartenden Einzug 5 und die Topographie des gewünschten Einzugs 4 am Fertigteil festgestellt (siehe Fig. 5) und daraus im vierten Arbeitsschritt in dem entsprechenden Bereich des Kettenrades 1 eine Sollkontur SK durch eine Materialzugabe bestimmt, die das fehlende Volumen im Bereich des Einzugs ergänzt (siehe Fig. 3). Es entsteht somit ein Rohteil 6 mit der Sollkontur SK.

Durch das erneute virtuelle Feinschneiden der korrigierten Kontur (Sollkontur) wird das Rohteil im fünften Arbeitsschritt für die virtuelle Umformung vorbereitet.
Im sechsten Arbeitsschritt wird das Rohteil dann virtuell umgeformt und der sich einstellende Einzug überprüft. Dies wiederholt sich, bis der gewünschte Einzug erreicht ist.

Nach Ablauf dieser Arbeitsschritte können im letzten Arbeitsschritt der Schneidstempel und die Schneidplatte für eine erste Arbeitsstufe auf die ermittelte Sollkontur SK des Rohteils 6 und die Matrize auf die ermittelte Endkontur EK am Fertigteil ausgelegt werden.

Der eigentliche Herstellungsvorgang des Kettenrades 1 erfolgt in zwei Arbeitsstufen, die in einem Werkzeug zusammengefasst sind, und zwar in einer Feinschneidstufe und einer nachfolgenden Umformstufe. Dieses Feinschneiden unterscheidet gegenüber dem herkömmlichen Feinschneiden dadurch, dass das Rohteil 6 zumindest im Bereich des Einzugs in einer gegenüber dem Fertigteil definiert gewählten Materialzugabe zur Endkontur ausgeschnitten wird, deren Größe auf ein Materialvolumen eingestellt wird, das den durch den Einzug hervorgerufenen Volumendefekt in einen vorgegebenen Maß ergänzt, ausgleicht oder übertrifft.
In der zweiten Arbeitsstufe wird dieses Materialvolumen durch einen Umformvorgang entgegen der Schneidrichtung der ersten Arbeitsstufe an der Schnittlinie des Rohteils zum gezielten Auffüllen des entstandenen Einzugs verschoben, so dass der gewünschte Einzug am Fertigteil erhalten wird.

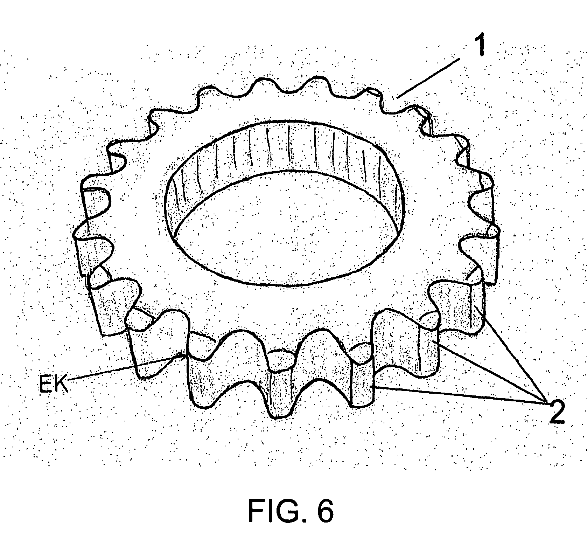

In Fig. 6 ist dieser Zustand am Fertigteil gezeigt. Man erkennt, dass die Zähne scharfkantig sind.

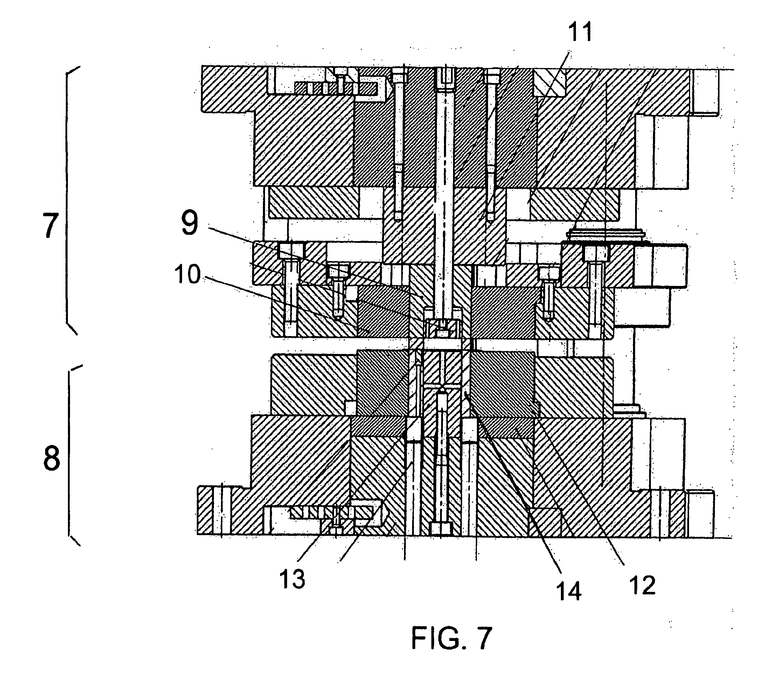

Die Fig. 7 zeigt den grundsätzlichen Aufbau der ersten Arbeitsstufe, die ein Oberteil 7 und ein Unterteil 8 umfasst. Zum Oberteil 7 gehören im Wesentlichen ein Schneidstempel 9, der an einer Führungsplatte 10 geführt ist und eine Druckplatte 11 für den Schneidstempel 9. Das Unterteil 8 ist gebildet aus einer Schneidplatte 12, einem Lochstempel 13 und einem Auswerfer 14. Der nicht dargestellte Bandstreifen aus Einsatzstahl mit einer Dicke von 7 mm, aus dem nach dem erfindungsgemäßen Verfahren Kettenräder 1 hergestellt werden sollen, ist nach dem gezeigten Stellzustand des Werkzeugs zwischen Führungsplatte 10 und Schneidplatte 12 eingeklemmt.

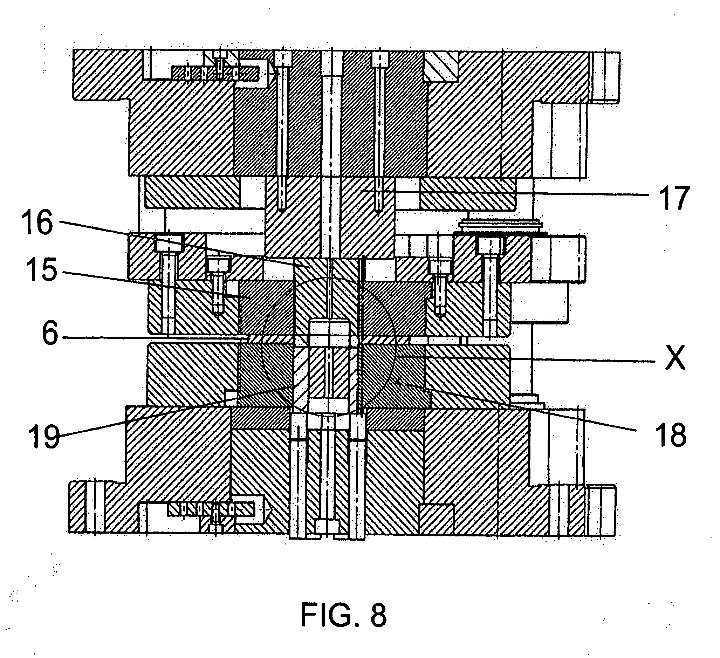

In Fig. 8 ist die zweite Arbeitsstufe gezeigt, die sich ebenso in ein Oberteil und Unterteil aufteilt. Das Oberteil enthält als Hauptbaugruppen eine Führungsplatte 15, einen Stempel 16 und eine Druckplatte 17 für den Stempel 16. Zum Unterteil gehören im Wesentlichen eine Matrize 18 und ein Auswerfer 19. Das in der ersten Arbeitsstufe ausgeschnittene Rohteil 6 liegt geklemmt zwischen Stempel 16 und Auswerfer 19.

Der Schneidstempel 9 und die Schneidplatte 12 sind so ausgelegt, dass das Rohteil 6 mit der zuvor bestimmten Sollkontur SK ausgeschnitten wird, die gegenüber der Endkontur EK am Kettenrad 1 etwas größer ist. Dies gilt insbesondere für diejenigen Bereiche, die einen großen Einzug erwarten lassen. Je mehr der Einzug reduziert werden soll, desto größer muss die Differenz zwischen der Sollkontur SK und der Endkontur EK sein.

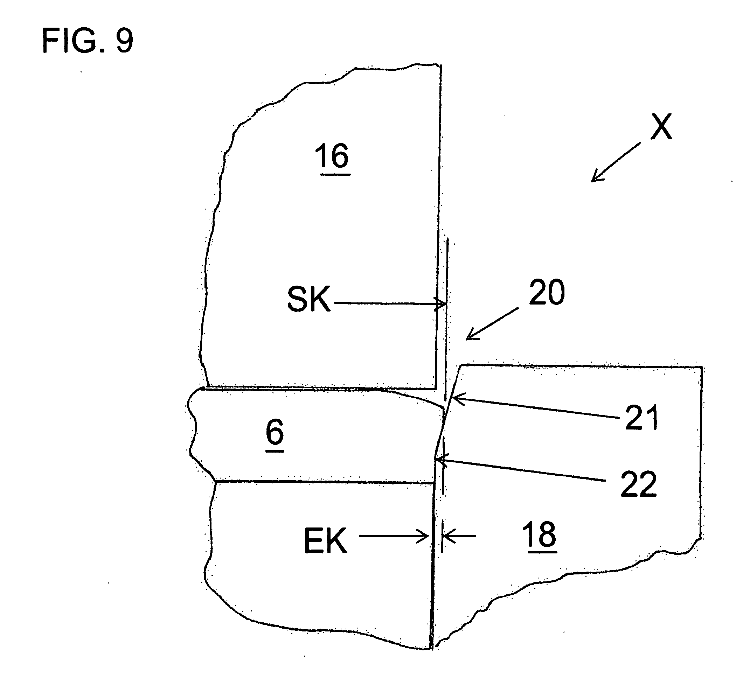

In der zweiten Arbeitsstufe wird das gegenüber der Endkontur EK etwas größere ausgeschnittene Rohteil 6 durch den Stempel 16 in die Matrize 18 gedrückt. Die Matrize 18 weist die Endkontur EK des Kettenrades 1 (Fertigteil) auf. Der Matrizeneinlauf 20 besitzt eine Anwinklung 21 von etwa 10°, die mit einem scharfen Übergang 22 in die vertikale Endkontur EK übergeht. Diese Verhältnisse sind in der Fig. 9 dargestellt. Man erkennt, dass das vom Rohteil 6 infolge der Materialzugabe hervorstehende Material in der Höhe verschoben wird und so den Bereich des Einzugs teilweise oder komplett auffüllt, bzw. im Extremfall auch eine Überhöhung in diesem Bereich erzeugt werden kann. Dies hängt von der Größe der Materialzugabe ab, so dass der Einzug an Fertigteilen mit Ecken, scharfen Übergängen, Zähnen o. dgl. entsprechend ihrer Funktion wunschgemäß einstellbar oder auch vollkommen kompensiert werden kann.

Bezugszeichenliste

| | |
|---|---|
| Kettenrad | 1 |
| Zähne von 1 | 2 |
| Einzug bei 2 | 3 |
| Gewünschter Einzug | 4 |
| Erwarteter Einzug | 5 |
| Rohteil | 6 |
| Oberteil | 7 |
| Unterteil | 8 |
| Schneidstempel | 9 |
| Führungsplatte für 9 | 10 |
| Druckplatte für 9 | 11 |
| Schneidplatte | 12 |
| Lochstempel | 13 |
| Auswerfer | 14 |
| Führungsplatte für 16 | 15 |
| Stempel | 16 |
| Druckplatte für 16 | 17 |
| Matrize | 18 |
| Auswerfer | 19 |
| Matrizeneinlauf | 20 |
| Anwinklung von 20 | 21 |
| Übergang | 22 |
| Einzugsbreite | b |
| Endkontur | EK |
| Funktionsbreite | FB |
| Sollkontur | SK |
| Materialdicke | s |
| Einzugstiefe | t |
| Topographie | T |

## Patentansprüche

1. Verfahren zum Beeinflussen der Schnitt- und Funktionsfläche, insbesondere des Einzugs, an feingeschnittenen Fertigteilen, beispielsweise eines Zahnrades, aus einem Bandstreifen, bei dem der Bandstreifen zwischen einem zumindest aus Schneidstempel (9) und Führungsplatte (10) für den Schneidstempel (9) umfassenden Oberteil (7) und einem zumindest Schneidplatte (12) und Auswerfer (14) enthaltenden Unterteil (8) beim Schließen geklemmt und in einer ersten Arbeitsstufe ein Rohteil (6) aus dem Bandstreifen mit Einzug ausgeschnitten wird, **dadurch gekennzeichnet, dass** das Rohteil (6) zumindest im Bereich des Einzugs mit einer gegenüber dem Fertigteil definiert gewählten Materialzugabe zur Kontur ausgeschnitten wird, deren Größe innerhalb der ersten Arbeitsstufe auf ein Materialvolumen eingestellt wird, das den durch den erwarteten Einzug (5) hervorgerufenen Volumendefekt in einem vorgegebenen Maß ergänzt, ausgleicht oder übertrifft, und dass anschließend in einer zweiten Arbeitsstufe dieses Materialvolumen durch einen Umformvorgang entgegen der Schneidrichtung der ersten Arbeitsstufe an der Schnittlinie des Rohteils zum gezielten Auffüllen des gewünschten Einzugs (4) verschoben wird.

2. Verfahren nach Anspruch 1, **dadurch gekennzeichnet, dass** die Größe der Materialzugabe zur Kontur in Abhängigkeit der Geometrie des Fertigteiles, der Festigkeit und Art des Materials, der Dicke des Fertigteils durch eine virtuelle Feinschneidsimulation und die Größe des zu verschiebenden Materialvolumens durch eine virtuelle Umformsimulation vor dem realen Feinschneiden bestimmt wird.

3. Verfahren nach Anspruch 1 oder 2, **gekennzeichnet durch** folgende Schritte:
a) Durchführen einer Feinschneidsimulation in demjenigen Bereich am Fertigteil, welcher beeinflusst werden soll, und Ermitteln eines virtuellen Einzugs (5),
b) Bestimmen der Topografie (T) des zu erwartenden Einzugs (5) aus Schritt a) und der Topografie eines gewünschten Einzugs (4) am Fertigteil,
c) Bestimmen des fehlenden Volumens aus Schritt b), um die gewünschte Endkontur (EK) beim Einzug am Fertigteil zu erreichen,
d) Bestimmen einer korrigierten Kontur für den entsprechenden Bereich (Sollkontur) aus den Schritten a) bis c) **durch** Materialzugabe, um das fehlende Volumen im Bereich des Einzugs zu ergänzen,
e) Durchführen eines erneuten virtuellen Feinschneidens der korrigierten Kontur (Sollkontur) und Bestimmen der Topografie (T) des sich einstellenden Einzugs,
f) Durchführen eines virtuellen Umformens der feingeschnittenen, korrigierten Kontur mit einer Umformmatrize (18), welche nach der Endkontur (EK) des Fertigteils ausgelegt ist und Bestimmen des sich einstellenden korrigierten Einzuges,
g) Wiederholen der Schritte d) bis f) bis der gewünschte Einzug erreicht wird,
h) Auslegen von Schneidplatte (12) und Schneidstempel (9) der ersten Arbeitsstufe auf die mit den Schritten a) bis g) gefundene korrigierte Kontur (Sollkontor) des Rohteils (6).

4. Verfahren nach einem der Ansprüche 1, **dadurch gekennzeichnet, dass** zum Umformen des feingeschnittenen Rohteiles eine Matrize mit Anwinklung verwendet wird.

5. Vorrichtung geeignet zum Beeinflussen der Schnitt- und Funktionsfläche, insbesondere des Einzugs, an feingeschnittenen Fertigteilen, beispielsweise Zahnräder, aus einem Bandstreifen, geeignet zur Durchführung des Verfahrens nach Anspruch 1, mit einem zweiteiligen Werkzeug, das in der ersten Arbeitsstufe mindestens einen Schneidstempel (9), eine Führungsplatte (10) für den Schneidstempel, einen Auswerfer (14) und eine Schneidplatte (12), wobei der Bandstreifen zwischen Führungsplatte (10) und Schneidplatte (12) beim Feinschneiden eines Rohteiles (6) eingeklemmt ist, und in der zweiten Arbeitsstufe einen Stempel (16) und eine die Endkontur (EK) aufweisende Matrize (18) umfasst, **dadurch gekennzeichnet, dass** die Matrize (18) eine dem Stempel (16) zugewandte Anwinklung (21) aufweist und die zweite Arbeitsstufe einen Auswerfer (19) enthält, wobei das zwischen Stempel (16) und Auswerfer (19) geklemmte, mit einer Materialzugabe ausgeschnittene Rohteil (6) in die Matrize (18) zurückgedrückt wird, so dass die Materialzugabe entlang der Schnittfläche des feingeschnittenen Rohteils (6) zum gezielten Auffüllen des Einzugs verschoben wird.

6. Vorrichtung nach Anspruch 5, **dadurch gekennzeichnet, dass** die Anwinklung (21) der Matrize (18) etwa 8 bis 15°, vorzugsweise 10°, beträgt.

## Claims

1. Method for influencing the cut and functional face, especially the reduction, on fine-blanked finished parts, for example, a gear or the like, cut out of a metal strip, wherein the metal strip is clamped during closure between an upper part at least comprising a cutting punch and guide plate for the cutting punch and a lower part at least comprising a die plate and ejector and in a first working stage a blank with reduction is cut out of the metal strip, **characterized in that** the blank is cut out with a defined material allowance relative to the contour of the finished part at least in the area of the reduction, the size of which within the first working stage is adjusted to a stipulated degree to a material volume that fills up, compensates or exceeds the volume deficit that occurs due to the reduction to a preset value and by subsequently, during a second working stage, shifting this material volume in a forming process opposite the cutting direction of the first working stage on the cutting line of the blank to purposefully fill up the developed reduction.

2. Method according to claim 1, **characterized in that** the size of the material allowance relative to the contour is defined as a function of the geometry of the finished part, the strength and the type of the material, the thickness of the finished part by means of a virtual fine blanking simulation and the size of the material volume to be shifted by means of a virtual forming simulation before actual fine blanking starts.

3. Method according to claims 1 or 2, **characterized by** the following steps:
a) Performance of fine blanking simulation in the area of the finished part that is to be influenced, and determination of a virtual reduction,
b) Determining the topography of the expected reduction resulting from step a) and the topography of a desired reduction on the finished part,
c) Determining the missing volume resulting from step b) to reach the desired net shape contour relative to the reduction on the finished part,
d) Determining a corrected contour for the respective area (nominal contour) resulting from steps a) to c) by adding a material allowance to compensate the missing b) volume in the area of the reduction,
e) Carrying out a new virtual fine blanking of the corrected contour (nominal contour) and determining the topography of the developing reduction,
f) Carrying out virtual forming of the fine-blanked, corrected contour with a forming die matching the net shape contour of the finished part and determining the developing corrected reduction,
g) Repeating steps d) to f) until the desired reduction is reached,
h) Designing the die plate and cutting punch of the first working stage according to the corrected contour (nominal contour) of the blank found during steps a) to g).

4. Method according to one of the claims 1, **characterized in that** a die with angular inclination is used to form the fine-blanked blank.

5. Device for influencing the cut and functional face, especially the reduction, on fine-blanked finished parts, for example gears, cut out of a metal strip, for implementation of the method according to claim 1 with a tool having two parts, in the first working stage at least comprising a cutting punch (9), a guide plate (10) for the cutting punch, an ejector (14) and a die plate (12), wherein the metal strip is clamped between guide plate (10) and die plate (12) during fine blanking of a blank (6), **characterized in that** the tool in a second working stage comprises a punch (16) and a die (18) provided with an angular inclination (21) facing the punch (16) and having a net shape contour (EK) and an ejector (19), wherein the blank (6) cut out with a material allowance and clamped between punch (16) and ejector (19) is pushed back into the die (18), so that the material allowance is shifted on the cutting line of the fine-blanked blank (6) to purposefully fill up the reduction.

6. Device according to claim 6 [sic: 5], **characterized in that** the angular inclination (21) of the die (18) amounts to about 8 to 15°, advantageously 10°.

## Revendications

1. Procédé destiné à influencer la surface de coupe et de fonction, notamment le renfoncement, sur des pièces finies découpées avec précision, par exemple d'une roue dentée, à partir d'une bande droite, dans lequel la bande droite est serrée lors de la fermeture entre une partie supérieure (7) comprenant au moins un poinçon de découpage (9) et une plaque de guidage (10) pour le poinçon de découpage (9) et une partie inférieure (8) comportant au moins une plaque de découpage (12) et un éjecteur (14) et dans lequel, dans une première phase de travail, une ébauche (6) est découpée dans la bande droite avec un renfoncement, **caractérisé en ce que** l'ébauche (6) est découpée, au moins au niveau du renfoncement, avec une addition de matière au contour choisie de manière définie par rapport à la pièce finie et dont la quantité est réglée durant la première phase de travail sur un volume de matière qui complète, compense ou dépasse dans une mesure prédéterminée le défaut de volume dû au renfoncement escompté (5), et **en ce qu'**ensuite, dans une deuxième phase de travail, ce volume de matière est déplacé par une opération de formage dans la direction opposée au sens de coupe de la première phase de travail le long de la ligne de coupe de l'ébauche pour le remplissage ciblé du renfoncement souhaité (4).

2. Procédé selon la revendication 1, **caractérisé en ce que** la quantité de l'addition de matière au contour est déterminée en fonction de la géométrie de la pièce finie, de la résistance et du type de la matière, de l'épaisseur de la pièce finie par une simulation de découpage de précision virtuelle, et la quantité du volume de matière à déplacer est déterminée par une simulation de formage virtuelle avant le découpage de précision réel.

3. Procédé selon la revendication 1 ou 2, **caractérisé par** les étapes suivantes :
a) réalisation d'une simulation de découpage de précision dans la région de la pièce finie devant être influencée et détermination d'un renfoncement virtuel (5),
b) détermination de la topographie (T) du renfoncement escompté (5) à partir de l'étape a) et de la topographie d'un renfoncement souhaité (4) sur la pièce finie,
c) détermination du volume manquant à partir de l'étape b) afin d'obtenir le contour final (EK) souhaité pour le renfoncement sur la pièce finie,
d) détermination d'un contour corrigé pour la région correspondante (contour de consigne) à partir des étapes a) à c) par addition de matière afin de compléter le volume manquant au niveau du renfoncement,
e) réalisation d'un nouveau découpage de précision virtuel du contour corrigé (contour de consigne) et détermination de la topographie (T) du renfoncement résultant,
f) réalisation d'un formage virtuel du contour corrigé découpé avec précision avec une matrice de formage (18) adaptée au contour final (EK) de la pièce finie et détermination du renfoncement corrigé résultant,
g) répétition des étapes d) à f) jusqu'à l'obtention du renfoncement souhaité,
h) adaptation de la plaque de découpage (12) et du poinçon de découpage (9) de la première phase de travail au contour corrigé (contour de consigne) trouvé par les étapes a) à g) de l'ébauche (6).

4. Procédé selon l'une des revendications 1, **caractérisé en ce qu'**une matrice présentant une inclinaison est utilisée pour le formage de l'ébauche découpée avec précision.

5. Dispositif permettant d'influencer la surface de coupe et de fonction, notamment le renfoncement, sur des pièces finies découpées avec précision, par exemple des roues dentées, à partir d'une bande droite, apte à la mise en oeuvre du procédé selon la revendication 1, doté d'un outil en deux parties comprenant dans la première phase de travail au moins un poinçon de découpage (9), une plaque de guidage (10) pour le poinçon de découpage, un éjecteur (14) et une plaque de découpage (12), la bande droite étant serrée entre la plaque de guidage (10) et la plaque de découpage (12) lors du découpage de précision d'une ébauche (6), et comprenant dans la deuxième phase de travail un poinçon (16) et une matrice (18) présentant le contour final (EK), **caractérisé en ce que** la matrice (18) présente une inclinaison (21) tournée vers le poinçon (16) et la deuxième phase de travail comporte un éjecteur (19), sachant que l'ébauche (6), serrée entre le poinçon (16) et l'éjecteur (19) et découpée avec une addition de matière, est repoussée dans la matrice (18) de sorte que l'addition de matière est déplacée le long de la surface de coupe de l'ébauche (6) découpée avec précision pour le remplissage ciblé du renfoncement.

6. Dispositif selon la revendication 5, **caractérisé en ce que** l'inclinaison (21) de la matrice (18) est d'environ 8 à 15°, de préférence de 10°.
